# EUROPEAN PATENT SPECIFICATION

(11) **EP 3 006 187 B1**
(45) Date of publication and mention of the grant of the patent: **18.04.2018**
(21) Application number: 15002802.5
(22) Date of filing: 30.09.2015
(51) Int. Cl.: B29C 49/00, B29C 49/04, A47F 8/02, B29K 55/02, B29K 105/26, B29L 31/52, B29L 22/00

(54) **METHOD FOR MOLDING HOLLOW OBJECTS FROM RECYCLED POLYMER**
VERFAHREN ZUM FORMEN VON HOHLEN GEGENSTÄNDEN AUS RECYCELTEM POLYMER
PROCÉDÉ DE MOULAGE D'OBJETS CREUX À PARTIR DE POLYMÈRE RECYCLÉ

(30) Priority: 10.10.2014 US 201414511462
(43) Date of publication of application: 13.04.2016
(73) Proprietor: Leo D. Bernstein & Sons, Inc., New York, NY 10001 (US)
(72) Inventor: Bernstein, Mitchell, New York, NY 10001 (US)
(74) Representative: Müller-Boré & Partner Patentanwälte PartG mbB

(56) References cited:
- EP-A1- 1 036 641
- GB-A- 2 300 588
- DATABASE WPI Week 198308 Thomson Scientific, London, GB; AN 1983-18794K XP002752991, -& JP S58 7444 A (KANEMOTO M) 17 January 1983 (1983-01-17)
- DATABASE WPI Week 200053 Thomson Scientific, London, GB; AN 2000-569463 XP002752992, -& JP 2000 225046 A (SUN MANNEQUIN KOGEI KK) 15 August 2000 (2000-08-15)
- DATABASE WPI Week 201318 Thomson Scientific, London, GB; AN 2012-P49852 XP002752993, -& CN 102 642 298 A (TAIZHOU SUNRISE PLASTIC CO LTD) 22 August 2012 (2012-08-22)

## Description

The present disclosure relates to a method for molding a hollow object from recycled polymer. The disclosure further relates to a method for blow molding a large hollow object from recycled ABS, and to an object made by the method.

Demand is great for goods that are durable, tough, and attractive for various consumer and commercial uses. In particular, large hollow objects that are essentially enclosed volumes may be in demand. Hollow items, such as drums and stationary or mobile tanks that have only relatively small openings for filling and emptying the drum for transportation and storage of flowable materials; mannequins, models, and other representations of people and animals, or parts thereof; and similar objects, exemplify but one class of such objects.

Such goods may be made from many materials, such as wood, metal, fiber, resins, and natural and synthesized polymers. However, many materials have a negative aspect. For example, wood requires use of a natural resource that takes time to replace. Plastics require hydrocarbons to make up the synthesized polymers. Plastics and metals also may impact the environment negatively when disposed. Fiber and resin goods often require significant time to manufacture.

For example, mannequins are valuable items of commerce that may be made of many materials. Sometimes, a mannequin is a representation of a complete body, sometimes without a head. Other times, a mannequin may represent only a part of a body, such as a torso. Parts of bodies, such as arms and legs, also may be formed. Models of objects also may be valuable items.

Mannequins, or parts thereof, of wood, fiber and resins, or metal may be satisfactory for a time. However, metal may rust and wood and fibers may fray or otherwise degrade, making it difficult to maintain a safe environment for those who work with the mannequins and to present a visually-pleasing mannequin to clientele. Mannequins comprising wood may be quite heavy. Thus, plastic may be an attractive material, provided that it has the durability required and a reasonable cost.

One method for reducing the impact of plastics on the environment is to recycle the plastic for a renewed use. However, plastic may be rendered unsuitable for recycle by additives and other components in the plastic. Plastic also may be considered unsuitable for recycle in view of the structure of the plastic, *i.e.,* whether the plastic was heavily cross-linked or otherwise configured.

The difficulty of recycling plastics is well-known. Some plastics, such as polyethylene terephthalate, are readily re-used, but often not in the same type of product. Polyethylene terephthalate often is used in bottles for food and beverages, but typically virgin material is used in polyethylene terephthalate bottles. Used polyethylene terephthalate bottles can be recycled into other products, but, typically, not back into bottles.

ABS, acrylonitrile/butadiene/styrene, is a plastic that may be used to make mannequins, models, and parts thereof. However, ABS is an expensive plastic, so recycling may be required to improve economic feasibility for some uses. Although ABS is durable and tough, it is believed that ABS may be recycled only into lower-value products for the reasons identified herein. Thus, as with polyethylene terephthalate, significant value typically is lost when ABS is re-used. Thus, ABS may be considered relatively expensive as a plastic for mannequins and other large, hollow containers when environmental effects are considered. New, or virgin, ABS is expensive, and recycled ABS may not be structurally strong enough or inexpensive enough to be used for such purposes.
GB 2 300 588 A discloses a polymeric article, for example a vehicle component, which comprises a thermoplastic substrate provided with a thermoplastic coating layer, wherein the substrate may comprise recycled material and the article may be prepared by an in-mold coating process.

Therefore, there exists a need in the art for a method of making hollow containers and objects, including mannequins, models, and parts thereof, from recycled polymer such as ABS plastic.
The solution to the above problems is achieved by providing the embodiments characterized in the claims.
In particular, there is provided a method for making a blow molded hollow object, the method comprising:
inflating a parison of acrylonitrile/butadiene/styrene (ABS) containing at least 30 wt percent Grade A recycled ABS until it fills a mold;
cooling the ABS containing at least 30 wt percent Grade A recycled ABS to form the hollow object; and
ejecting the hollow object from the mold,
wherein the Grade A recycled ABS contains ABS product that is clean and derived from ABS that was used once.

Other systems, methods, features, and advantages of the invention will be, or will become, apparent to one of ordinary skill in the art upon examination of the following figures and detailed description. It is intended that all such additional systems, methods, features and advantages be included within this description and this summary, be within the scope of the invention, and be protected by the claims.

The invention can be better understood with reference to the following drawings and description. The components in the figures are not necessarily to scale, emphasis instead being placed upon illustrating the principles of the invention. Moreover, in the figures, like reference numerals designate corresponding parts throughout the different views.
FIG. 1 illustrates an embodiment of a large hollow object;
FIG. 2 illustrates an embodiment of a part of a mannequin;
FIG. 3 illustrates an embodiment of a part of a mannequin;
FIG. 4 illustrates an embodiment of a large hollow object;
FIG. 5 illustrates an embodiment of a large hollow object combined with other mannequin parts;
FIG. 6 illustrates an embodiment of a large hollow object;
FIG. 7 illustrates an embodiment of a large hollow object;
FIG. 8 illustrates an embodiment of an assembly of large hollow objects;
FIG. 9 illustrates part of a connector between mannequin portions; and
FIG. 10 illustrates an embodiment of a large hollow object.

As used herein, the term "hollow object" means a one-piece object that has a hole or an empty space inside. Thus, the material of construction typically is at the periphery of the object and forms the boundaries of the object. A hollow object may have small openings for access to the interior. For example, such small openings could accommodate filling the object with a flowable material, or emptying the material from the object. The openings also could accommodate, e.g., a small camera or light for viewing the interior of the object. However, hollow object is not intended to encompass and is distinct from an "open-ended" object, such as a pail, which may have a removable end or lid.

As used herein, "large," when associated with 'hollow object,' means an object that has a volume of at least about 15 liters, typically at least about 20 liters, more typically at least about 30 liters, and most typically at least about 50 liters.

As used herein, the term "recycled polymer" means a polymer that is not virgin polymer, *i.e*., a polymer that has been put to a use and then recovered for re-use.

The term "ABS recycle," when used in this disclosure, means virgin ABS that has been used once and recovered for re-use. ABS recycle also may include recycled ABS molding waste that has been re-ground up to 3 times.

"Recycled ABS," when used in this disclosure, means a combination of virgin ABS and at least about 30 wt percent ABS recycle. "Recycled ABS" also includes 100 wt percent ABS recycle. Recycled ABS includes only ABS and additive compositions, such as anti-oxidants, uv protectants, dyes, tints, or colors, that do not materially affect the basic and novel characteristics of the ABS.

"Molding waste," as used herein, is material that formed sprues, molding flash, imperfectly formed objects, and other materials that were prepared for molding but that did not form product and were therefore waste.

A "mannequin," as used herein, is a hollow object that is a one-piece, 3-dimensional representation of a human figure, or of a part of a human figure, such as an arm, a leg, a torso, or other part. As used herein, a mannequin need not include a head.

A "model," as used herein, is a one-piece hollow 3-dimensional object that may be a smaller or larger physical representation of another object, such as a boat, an animal, a tree, for example, or other non-human object or item. A model also includes a hollow representation of a part of such other object, for example.

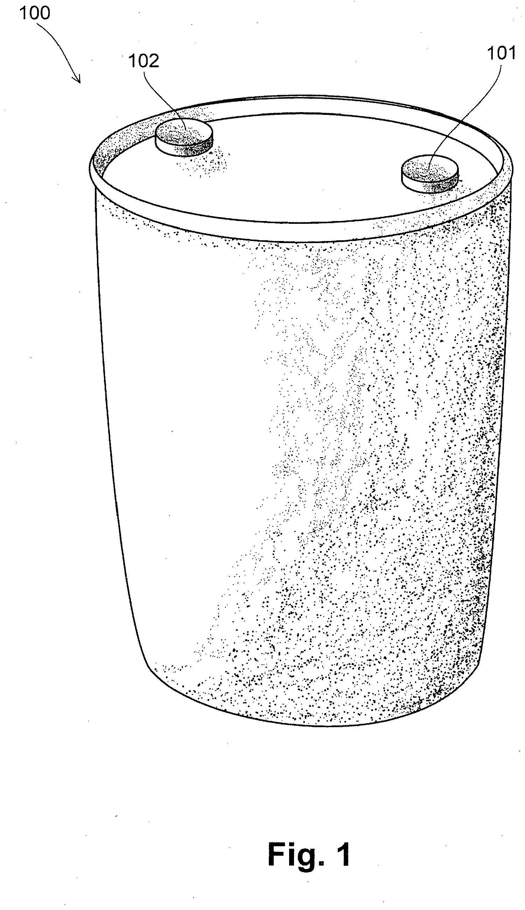

FIG. 1 illustrates a shape of a large hollow object 100 that may be molded in accordance with the disclosure. The object is a one-piece hollow object that has access port 101 and access port 102 in the top surface. Such objects are commonly known as drums.

Drums like drum 100 may be made of many materials, including polymers. The size of the drum is limited by the capacity of the molding machine and by the ability of the polymer to form the shape without introducing defects. Some molding machines, such as blow-molding machines, may have a maximum volume of the formed object of 1000 liters; some machines may have even larger capacities. It may be important to note that recycled polymer sometimes exhibits properties and characteristics different from virgin polymer, typically suffering some degradation in one or more properties. Therefore, it may not be possible to make a large hollow object from such recycled plastic. However, in some embodiments, drums having volumes of about 250 liters or more may be made.

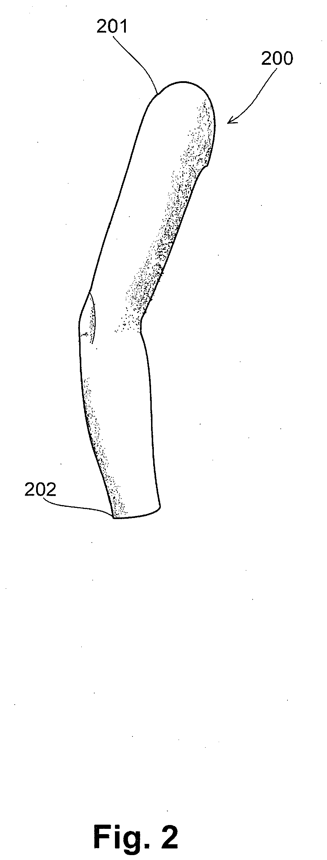

FIG. 2 - FIG. 7 illustrate other large hollow objects that may be made in some embodiments of the disclosure. For example, one common technique used in making mannequins is to form mannequin portions so that the mannequin may be posed and adjusted. The ability to pose a mannequin allows not only variety or presentations but also adjustability for size, lighting conditions, type of clothing, and so on. Also, for example, it may be possible to ship a mannequin more easily or efficiently if it can be partially disassembled.

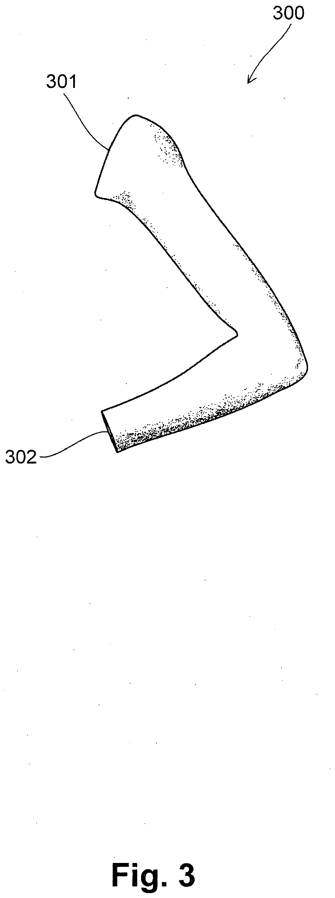

For example, FIG. 2 illustrates a right arm 200 from about shoulder end 201 to about wrist end 202 in a relatively straight configuration. Hands typically may be separately molded and then attached to the wrist end 202 of the arm. FIG. 3 illustrates a left arm akimbo 300. Wrist end 302 may have a hand added, with the hand resting on the hip or torso of a mannequin. Shoulder end 301 would be attached at the left shoulder of the torso. These arms may be made with recycled ABS. Although they may not represent a large hollow object, each of these is an example of a hollow object that may be made in accordance with a method set forth in the disclosure.

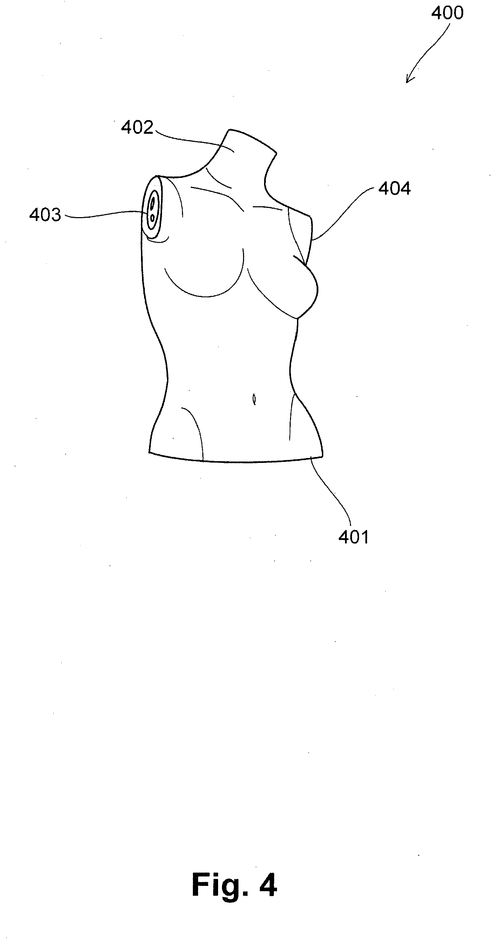

FIG. 4 illustrates a torso 400 to which exemplified arm 200 and arm 300 may be attached. The torso extends from approximately pelvis end 401 up to the neck end 402. The torso includes an attaching point 403 for arm 200 at the right shoulder and attaching point 404 for arm 300 at the left shoulder. These attaching points mate with similar attaching points on the arms. For example, the attaching points may be keyhole-style attachment points, wherein one portion has a key feature and the other portion has a key receiver. Attachment point features are well-known to the skilled practitioner and may be added to the features herein. The torso of FIG. 4 may be made from recycled ABS in accordance with a method set forth in the disclosure.

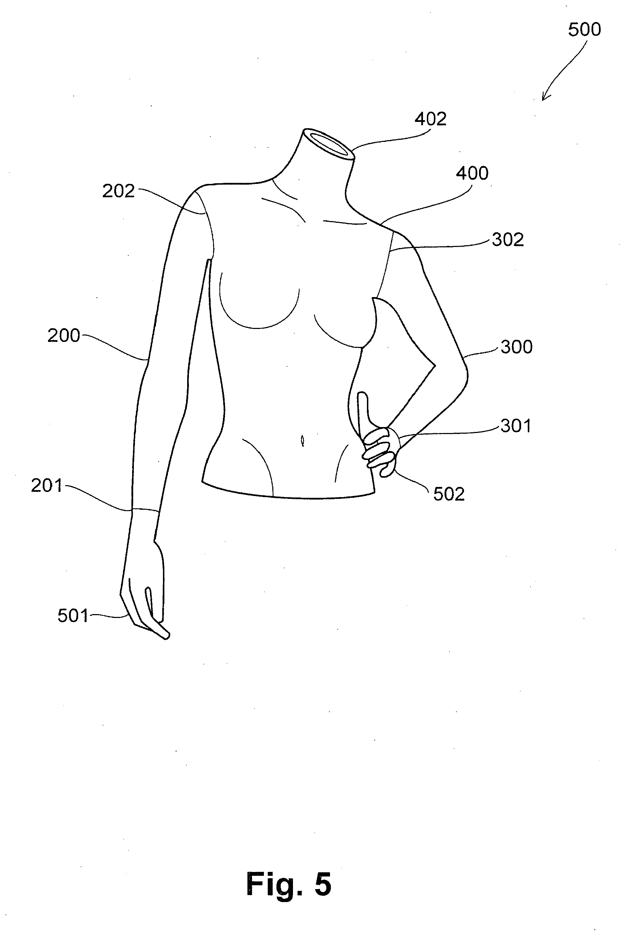

FIG. 5 illustrates portion 500 of a mannequin having arm 200 and arm 300 attached to the torso 400. Hand 501 is attached to wrist end 201 of arm 300 and hand 502 is attached to the wrist end 301 of arm 300 to complete portion 500 of the mannequin.

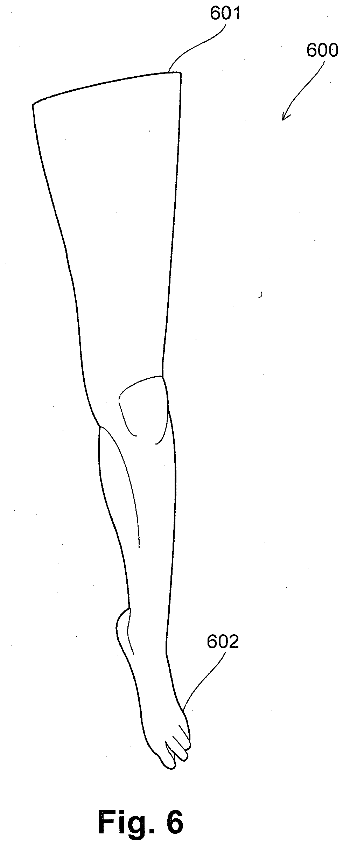

Legs and pelvis also form portions of a mannequin, and each may be made in accordance with embodiments of the disclosure. For example, FIG. 6 illustrates left leg 600, which extends from about the pelvis end 601 to the foot end 602. Leg 600 illustrates a left leg, but could illustrate a right leg instead.

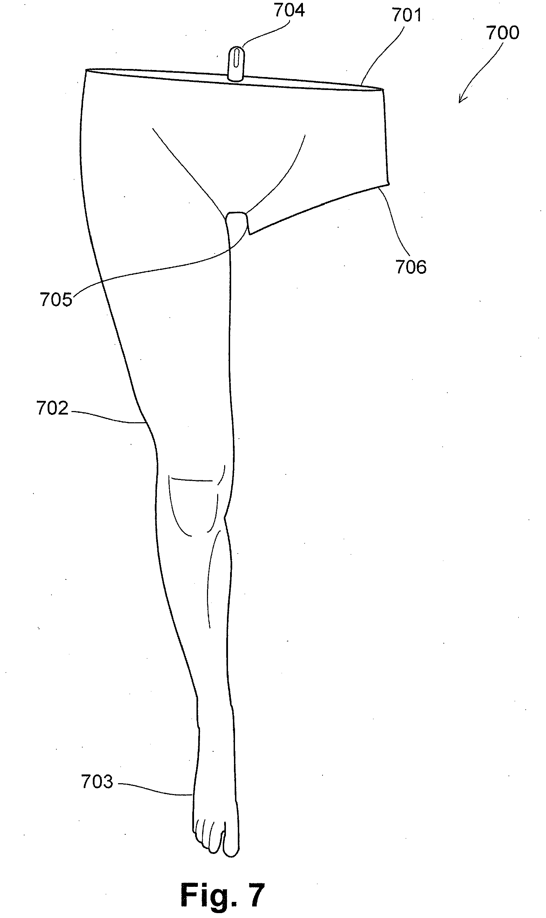

FIG. 7 illustrates portion 700 including a body lower core including pelvis 701 with right leg portion 702 extending to foot portion 703. Portion 700 does not include a left leg but rather includes a leg stub 705 that ends at surface 706. A left leg portion may be attached at surface 706. Connector 704 may be a key portion that mates with a key-hole portion of a torso. A similar attachment may be found on surface 706 to retain hip end 601 of leg 600. Embodiments of the disclosure may be formed as portion 700.

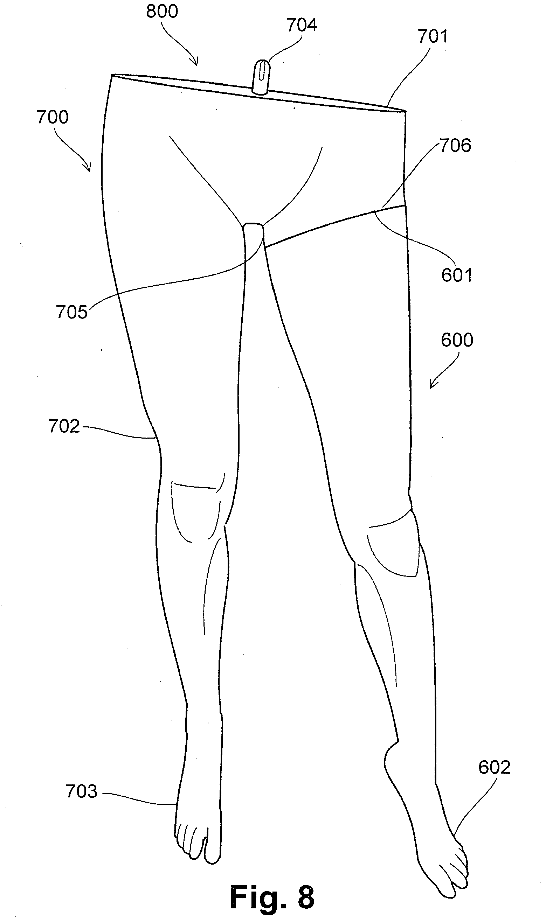

FIG. 8 illustrates a lower portion assembly 800 including lower body core 700 and left leg 600. A torso assembly may be mated with lower portion assembly 800 to form a complete mannequin.

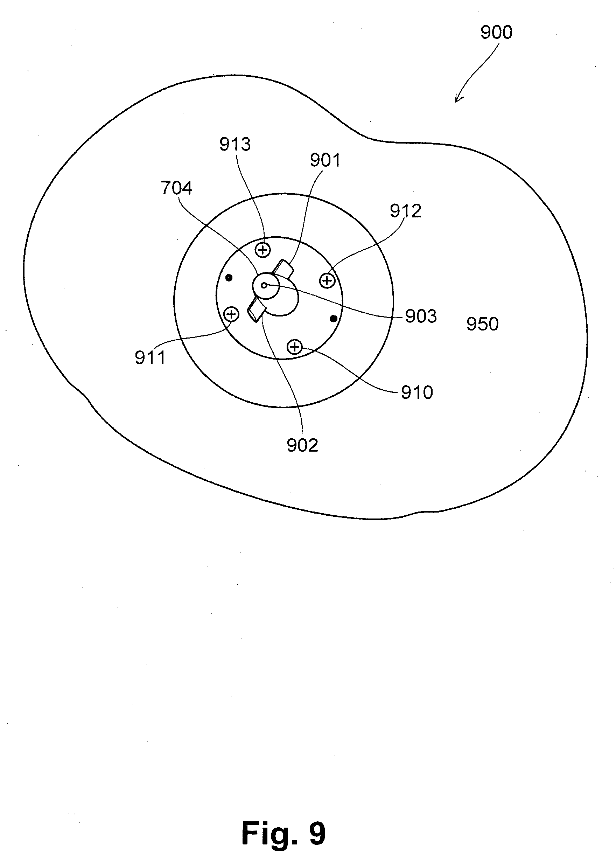

FIG. 9 illustrates a key-type connector 704 attached to surface 950 of portion 900. Connector 704 includes first key 901 and second key 902 extending from shaft 903. Connector 704 may be attached to surface 950 in any suitable manner, such as by melt adhesion, adhesion, or mechanical connectors. Mechanical connectors may include screw 910, second screw 911, third screw 912, and fourth screw 913. Mechanical connectors also may include rivets, for example.

Whereas the mannequin portions and parts described herein may be manufactured, the various parts must be assembled. Thus, it is necessary to ensure that the arms, legs, and hands match mechanically and may be assembled. It also is necessary to employ assemblers. Also, it may become necessary, as the mannequin ages and is repeatedly assembled and disassembled, to repair the connecting keys and other parts that wear. Therefore, larger mannequin parts requiring fewer connections and wear parts may be preferred.

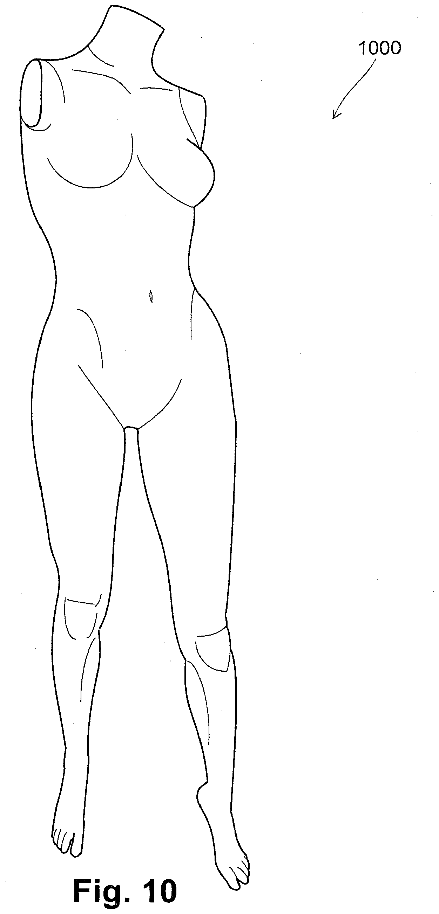

FIG. 10 illustrates an essentially complete mannequin 1000. The only items that needed to complete a human representation are a left arm and hand and a right arm and hand. This complete mannequin 1000 thus eliminates many of the joints and the need to ensure that appropriate parts are available to assemble a complete mannequin.

Mannequins often are made from synthetic polymers, or plastic. The properties and characteristics of plastics vary significantly, as do the costs. One polymer that has been found suitable for mannequins is ABS. ABS is a thermoplastic terpolymer comprising long chain polybutadiene cross-linked with shorter chains of poly(styrene-co-acrylonitrile). Thus, ABS forms a structurally-strong web, with butadiene providing flexibility and impact resistance and polystyrene providing an attractive, glossy surface. The relative proportions of the three monomers vary. The properties and characteristics of the ABS are related to both the relative proportions of the components and the manner in which the ABS is processed. For example, high molding temperature improves gloss and heat resistance, but low temperature molding yields higher impact resistance and strength. Additives such as antioxidants (to protect the polybutadiene) and additives to limit damage due to ultraviolet radiation also are commonly added. Thus, these types of additives would be found in recycled ABS, and they do not have a material effect on the fundamental properties and characteristics of ABS.

Although ABS is a well-known polymer, it may be expensive and requires use of hydrocarbon materials. Products containing ABS may be recycled. However, the success of ABS recycling is spotty. ABS was not characterized as recyclable in early recycling schemes, such as the resin coding system introduced in 1988 by the Society of the Plastics Industry. This system is the popular 7-division system now in common use, in which each of 6 classes or families of plastics is identified and separated. The seventh division is for everything else, including ABS. Even today, a significant number of recycling entities do not accept ABS. Further, even when ABS is recycled, skilled practitioners limit the fraction of previously-used ABS in a product to be mixed in with virgin ABS to a small fraction of the total, such as about 20 wt percent or 25 wt percent, with the remainder being virgin ABS. This limitation was observed to ensure that the properties and characteristics of the resultant product were acceptable.

Skilled practitioners observe this limit because recycling often degrades the properties and characteristics of a polymer material. ABS may be one such polymer. This phenomenon, combined with the variability of properties and characteristics as related to the exact composition of the polymer, may make it necessary in the scope of the embodiments to limit recycle of materials that have been recycled once. Further, in some embodiments, sprues, runners, mold flash, defectively-molded products, and the like, may be reground for use in recycled ABS so long as it has not been reground more than three times. In embodiments of the disclosure, limiting the number of times the ABS has been recycled enables forming of hollow objects, especially large hollow objects such as mannequins, with recycled ABS.

Such recycled ABS may be described as Grade A recycled ABS. The Grade A designation means that the product is clean and derived from ABS that was used once. Other scrap (sprues, runners, flash, and the like) that has been reground no more than about three times may be added. Although recycled ABS typically is black, pigments may be added to adjust color.

Grade A recycled ABS typically is supplied in the form of free-flowing approximately cylindrical pieces. The pieces typically may have a diameter of between about 1 mm and about 3 mm, and the cylinders may be between about 2 mm and about 4 mm in height. Such pieces are particularly convenient for feed to an extruder, as they are free-flowing.

Herein, recycled ABS contains at least about 30 wt percent of Grade A ABS recycle, or at least about 35 wt percent of Grade A ABS recycle, or at least about 40 wt percent of Grade A ABS recycle, or at least about 45 wt percent of Grade A ABS recycle, or at least about 50 wt percent of Grade A ABS recycle. More typically, recycled ABS may contain at least about 60 wt percent of Grade A ABS recycle, more typically at least about 75 wt percent, still more typically at least about 90 wt percent, and more typically at least about 95 wt percent. The upper limit of each range is 100 wt percent Grade A ABS recycle.

When ABS is recycled, not only are costs reduced, but also less virgin ABS is used and less ABS is discarded. Thus, recycle of ABS is both cost-effective and environmentally sensitive.

Blow molding may be carried out in a number of types of machines. The skilled practitioner recognizes that blow molding types include extrusion blow molding, injection blow molding, and injection stretch blow molding, for example. In some embodiments, the hollow objects are made by extrusion blow molding.

Extrusion blow molding requires that the polymer being molded be softened and introduced into a die head. Typically, the polymer is extruded through a standard extruder. A typical extruder includes a screw in a barrel. The heat generated by the extrusion process as the polymer is moved through the barrel may be sufficient to soften the polymer. In some embodiments, the barrel is heated to further soften the polymer material to be processed.

In some embodiments, thus-softened polymer is injected through a die head to form a parison, typically within a die or a mold. In alternative embodiments, parisons may be made, cooled, and stored for future use. Such parisons then are re-heated and again placed in a mold for further processing. A parison typically has a tube-like shape and is open at one end so that gas can be blown in to form the molded hollow object by blowing the walls of the softened parison toward the walls of the mold. The thickness of the parison may be varied to provide advantages to the object molded from the parison. For example, the thickness profile of the parison may be varied to deposit additional polymer at points of stress in the mannequin. Additional polymer at stress points forms a stronger mannequin. In particular, rather than using the profile solely to help fill the shape of the mannequin, the additional polymer is used to reinforce areas of the mannequin near mounting points.

The skilled practitioner recognizes that there are many types of parison die heads, including a multi-parison die head, an accumulating die head, and a continuous-type die head. A continuous-type die head continuously extrudes a tubular parison. An accumulating die head accumulates softened resin from the extruder. The accumulated mass then is pushed out of the head when the selected mass has been accumulated to start the parison-forming process. A multi-parison die head forms a plurality of parisons simultaneously. Machines used to form parisons often include controls and can be adjusted to provide a parison with a volume of plastic located on the parison so that it forms a reinforcement at a preselected location on the blown mannequin.

In some embodiments, an accumulating die head is used. Recycled ABS is heated by extrusion, and may be heated to a higher temperature by barrel heater to further soften it. Softened recycled ABS is delivered to the accumulating die head and then pushed from the die head into the die when the selected volume is present. In some embodiments, the temperature of the molten recycled ABS is less than about 250°C, and typically is between about 125°C and about 225°C, more typically between about 150°C and about 220°C. These temperatures are similar to those used for virgin ABS.

The parison may be in the form of a cylinder. In some embodiments, the ratio of parison length to parison diameter is approximately the same as the ratio of dimensions of the hollow object to be formed. In some embodiments, the die is in the approximate shape of the hollow object to be blow-molded. After the parison is formed, the parison may be moved from the die to the mold while it is still warm and gas is blown into the open end of the softened parison to inflate or expand it. In other embodiments, the parison is formed in the mold that provides the shape of the to-be-molded object and then is blown to complete the process. In either case, the gas flowing into the parison expands the parison and blows the softened polymer toward the interior of the mold. The quantity of gas and the speed at which it is blown into the parison are established so that the resultant hollow object is formed without defects such as holes and voids. The gas typically is air, but can be any gas that does not react with the recycled ABS. The polymer then is cooled for a period sufficient for the ABS to harden into the selected shape before it is released from the mold.

The temperature of the mold is the same as the mold temperature for virgin ABS. Thus, the mold temperature typically is maintained between about 15°C and about 100°C, more typically between about 25°C and about 75°C. As the skilled practitioner recognizes, the temperature of the melt and the temperature of the mold affect some of the properties and characteristics of the resultant cooled polymer. These effects can be useful in adjusting melt temperature and mold temperature to obtain a particular result.

In some embodiments, the mold is in the shape of a human arm. In another embodiment, the mold is in the shape of a bent human arm. In some embodiments, the mold is in the shape of an upper torso. In some embodiments, the mold is in the shape of the pelvis and one leg. In some embodiments, the mold is in the shape of a human body. In some embodiments, the mold is in the shape of a drum. In each embodiment, a hollow object is formed.

The mold for a model also may be in the shape of an animal, such as a deer, a bear, a large fish, or any other animal. In some embodiments, the mold for such a model may be a mold for a large hollow object. Each of these models may be made in accordance with embodiments of the disclosure.

Any commercially available extrusion blow molding machine that can accommodate the volume of the parts to be molded and the mass of polymer required to make the part is suitably used in embodiments of the disclosure. Recycled ABS may be extruded under the same conditions and in the same extrusion blow-molding machine as virgin ABS. No modifications to the molding machine are necessary to mold hollow objects, and particularly large hollow objects, in accordance with embodiments of the disclosure.

In embodiments of the disclosure, a mold that is used to form a hollow object or a large hollow object using virgin ABS may be used to form a hollow object or a large hollow object using recycled ABS. Extrusion blow molding machines suitably used in embodiments of the disclosure include any such machines that may be used to process virgin ABS. Extrusion blow molding machines suitably used in embodiments of the disclosure include machines of the sizes described above and of other sizes both larger and smaller than these. Processing conditions for recycled ABS are essentially identical to processing conditions for virgin ABS, including in particular with regard to temperatures, pressures, heating time, molding time, cooling time of the molded polymer, and the like.

In some embodiments, a machine having a maximum mold size of 600 mm by 1000 mm and a maximum platen separation distance of 900 mm may be used to form parts. Such a machine may have a heated extruder barrel and may have an accumulating die head sufficient to hold about 5 liters of polymer. Such a machine may be suitably used to form about 20 human arms in about one hour. The number of parts may be increased as the size of the parts decreases.

Similarly, a larger machine, having a maximum mold size of 1.75 m by 2.20 m and a maximum platen separation distance of 2.7 m, may be used to form large hollow objects. Such a machine may be used to form complete mannequins, such as that in FIG. 10, and large drums, such as that in FIG. 1.

Extrusion blow molding machines may provide a range of thicknesses of the hollow objects formed therein. The ability to manipulate the thickness of the hollow object relates to both the surface area of the hollow object and to the capacity of the die head. Also, the machine may blow form the parison so as to provide additional material thickness in highly-stressed portions of the mannequin. The volume of the die head must provide a volume of polymer that is sufficient to form a closed body, or hollow object, having the selected shape and thickness. For example, a hollow object requiring a thickness of 2 mm and having a surface area of 500 mm² will require an injection of 1000 mm³ of polymer. Thus, the die head must provide at least 1000 mm³ of polymer per hollow object made.

Mannequin embodiments of the disclosure may have any thickness, and typically have a range of thickness of between about 0.5 mm and about 10 mm; more typically between about 0.75 mm and about 7.5 mm; and most typically between about 1 mm and about 5 mm. In some embodiments, the thickness of a mannequin is between about 2 mm and about 4 mm. Typically, the thickness of a mannequin may be essentially uniform. There may be portions that are slightly thicker, up to about 5 mm for a 2 mm-thick mannequin, that are intended to resist stress, or are purposefully put at an inside corner or intersection of two surfaces where the angle between the surfaces is less than 180°. There also may be portions that are slightly thinner than the intended thickness, such as at an outside corner or intersection of two surfaces where the angle between the surfaces is greater than 180°. Such minor variations as typically may be expected in extrusion blow molding are acceptable in embodiments of the disclosure;

Whereas an arm may be molded as a unit with a hand, hands often may be formed separately and attached to an arm at a wrist joint. A mannequin with hands separate from arms may be easier to dress with the hands removed.

Hands may be formed from recycled ABS or from a composition of matter other than recycled ABS. For example, hands may be formed from PVC, polyurethane, or fiberglass. Although hands made from recycled ABS may be tinted to be other than black, compositions other than recycled ABS may provide additional variety of hand color.

Mannequins and other hollow objects may have flash and other molding artifacts. Such flash is removed, typically with a sharp instrument, and may be discarded or recycled.

Other hollow object embodiments of the disclosure may have different thickness ranges. For example, the thickness of a drum may be between about 3 mm and about 20 mm, and may depend upon the weight the drum will be expected to hold. The skilled practitioner will, with the guidance provided herein, be able to determine suitable thicknesses for such items.

Recycled ABS is dimensionally stable. Shrinkage typically may be no more than about 1.5 percent, more typically no more than about 1 percent. Recycled ABS also is isotropic, i.e., it shrinks at the same rate in all directions.

Large hollow objects and other hollow objects made of 100 percent recycled ABS in accordance with embodiments of the disclosure may be recycled. However, the resulting recycled product typically would not be considered Grade A recycled ABS.

### EXAMPLE 1

Mannequin bodies comprised of the upper torso and two attached legs are made in accordance with the disclosure. Between about 8 kg and about 10 kg of recycled ABS is used to make the mannequin body, depending on the size and gender of the mannequin. The recycled ABS is Grade A material contains both post-industrial and post-consumer products. The recycled ABS is processed in a semi-automatic blow molding machine. The recycled ABS is extruded through an accumulating die head at a temperature between about of 130°C and about 200°C. The softened recycled ABS is then forced out of the die head to form a parison with a specific profile designed to strengthen critical areas of the completed mannequin. This profile change increases the wall thickness of the mannequin from about 2 mm to about 5 mm near stress concentration points.

The parison is blown with compressed air at room temperature and having a maintained humidity of less than 15%. The blown recycled ABS, which now conforms to the inside of the mold, is cooled and cured by passing chilled water at 50°C through cooling passages within the mold.

A full body mannequin is removed from the mold after approximately 10 minutes and is immediately trimmed of excess flashing. The mannequin body requires minimal preparation work and cleanup prior to painting. A machine operating in this fashion will produce between about 45 and about 50 mannequin bodies in a single eight hour shift.

Large hollow objects having different shapes, such as shapes of models of animals suitably used as a decoy, may be manufactured in accordance with the disclosure.

## Claims

1. A method for making a blow molded hollow object, the method comprising:
inflating a parison of acrylonitrile/butadiene/styrene (ABS) containing at least 30 wt percent Grade A recycled ABS until it fills a mold;
cooling the ABS containing at least 30 wt percent Grade A recycled ABS to form the hollow object; and
ejecting the hollow object from the mold,
wherein the Grade A recycled ABS contains ABS product that is clean and derived from ABS that was used once.

2. The method of claim 1, wherein the hollow object is a large hollow object having a volume of at least 15 liters.

3. The method of claim 1 or 2, wherein the hollow object is
- an arm for a mannequin,
- a leg for a mannequin,
- a pelvis and leg for a mannequin,
- a torso for a mannequin, and/or
- a mannequin from neck to foot, optionally further including a head.

4. The method of claim 1 or 2, wherein the hollow object is a model of at least part of an animal.

5. The method of any one of claims 1 to 4, wherein the mold temperature is between 15°C and 100°C.

6. The method of any one of claims 1 to 5, wherein, after the parison is formed, the parison is moved to the mold while it is still warm and gas is blown into the open end of the softened parison to inflate or expand it, where the gas flowing into the parison expands the parison and blows the softened polymer toward the interior of the mold.

7. The method of any one of claims 1 to 5, wherein the parison is formed in the mold that provides the shape of the to-be-molded object and then is blown, where the gas flowing into the parison expands the parison and blows the softened polymer toward the interior of the mold.

8. The method of any one of claims 1 to 7, further comprising:
extruding ABS containing at least 30 wt percent Grade A recycled ABS at a temperature between 125°C and 225°C to form the parison.

## Patentansprüche

1. Verfahren zur Herstellung eines blasgeformten hohlen Gegenstands, wobei das Verfahren umfaßt:
das Aufblähen eines Vorformlings von Acrylnitril/Butadien/Styrol (ABS), enthaltend mindestens 30 Gew.-% recyceltes ABS von Grad A, bis er eine Form füllt, das Abkühlen des ABS, enthaltend mindestens 30 Gew.-% recyceltes ABS von Grad A, unter Bildung des hohlen Gegenstands, und
das Auswerfen des hohlen Gegenstands aus der Form,
wobei das recycelte ABS von Grad A ein ABS-Produkt enthält, das rein ist und von ABS abgeleitet ist, welches einmal verwendet wurde.

2. Verfahren gemäß Anspruch 1, wobei der hohle Gegenstand ein großer hohler Gegenstand mit einem Volumen von mindestens 15 Litern ist.

3. Verfahren gemäß Anspruch 1 oder 2, wobei der hohle Gegenstand ist:
- ein Arm für eine Schaufensterpuppe,
- ein Bein für eine Schaufensterpuppe,
- ein Becken und Bein für eine Schaufensterpuppe,
- ein Torso für eine Schaufensterpuppe, und/oder
- eine Schaufensterpuppe vom Hals bis zum Fuß, gegebenenfalls weiter einschließend einen Kopf.

4. Verfahren gemäß Anspruch 1 oder 2, wobei der hohle Gegenstand ein Modell von mindestens einem Teil eines Tieres ist.

5. Verfahren gemäß einem der Ansprüche 1 bis 4, wobei die Formtemperatur zwischen 15°C und 100°C ist.

6. Verfahren gemäß einem der Ansprüche 1 - 5, wobei, nachdem der Vorformling geformt worden ist, der Vorformling in die Form bewegt wird, während sie noch warm ist und Gas in das offene Ende des erweichten Vorformlings geblasen wird, um ihn zu füllen oder zu expandieren, wobei das Gas, welches in den Vorformling strömt, den Vorformling expandiert und das erweichte Polymer zu dem Inneren der Form bläst.

7. Verfahren gemäß einem der Ansprüche 1 - 5, wobei der Vorformling in der Form gebildet wird, welcher die Form des zu formenden Gegenstands bereitstellt, und anschließend geblasen wird, wobei das Gas, welches in den Vorformling strömt, den Vorformling expandiert und das erweichte Polymer zu dem Inneren der Form bläst.

8. Verfahren gemäß einem der Ansprüche 1 - 7, weiter umfassend:
das Extrudieren des ABS, enthaltend mindestens 30 Gew.-% recyceltes ABS von Grad A, bei einer Temperatur von zwischen 125°C und 225°C unter Bildung des Vorformlings.

## Revendications

1. Procédé de fabrication d'un objet creux moulé par soufflage, le procédé comprenant:
le gonflage d'une paraison d'acrylonitrile/butadiène/styrène (ABS) contenant au moins 30 pour-cent en poids d'ABS recyclé de grade A jusqu'à ce qu'il remplisse un moule;
le refroidissement de l'ABS contenant au moins 30 pour-cent en poids de l'ABS recyclé de grade A pour former l'objet creux; et
l'éjection hors du moule de l'objet creux,
dans lequel l'ABS recyclé de grade A contient un produit d'ABS qui est propre et dérivé de l'ABS ayant déjà été utilisé une fois.

2. Procédé selon la revendication 1, dans lequel l'objet creux est un grand objet creux d'un volume de 15 litres minimum.

3. Procédé selon la revendication 1 ou 2, dans lequel l'objet creux est:
le bras d'un mannequin,
la jambe d'un mannequin,
le pelvis et la jambe d'un mannequin,
le torse d'un mannequin, et/ou
un mannequin du cou aux pieds, comprenant éventuellement encore la tête.

4. Procédé selon la revendication 1 ou 2, dans lequel l'objet creux est le modèle d'au moins une partie d'un animal.

5. Procédé selon l'une quelconque des revendications 1 à 4, dans lequel la température du moule se situe entre 15°C et 100°C.

6. Procédé selon l'une quelconque des revendications 1 à 5, dans lequel après la formation de la paraison, la paraison est déplacée au moule tant qu'il est encore chaud et du gaz est insufflé dans l'extrémité ouverte de la paraison ramollie pour la gonfler ou l'étendre, le gaz injecté dans la paraison étendant la paraison et gonflant le polymère ramolli vers l'intérieur du moule.

7. Procédé selon l'une quelconque des revendications 1 à 5, dans lequel la paraison est formée dans le moule qui donne la forme à l'objet à mouler puis est gonflée, le gaz injecté dans la paraison étendant la paraison et gonflant le polymère ramolli vers l'intérieur du moule.

8. Procédé selon l'une quelconque des revendications 1 à 7, comprenant en outre:
l'extrusion de l'ABS contenant au moins 30 pour-cent en poids d'ABS recyclé de grade A à une température comprise entre 125°C et 225°C pour former la paraison.
